# EUROPEAN PATENT SPECIFICATION

(11) **EP 3 095 333 B1**
(45) Date of publication and mention of the grant of the patent: **23.10.2019**
(21) Application number: 15168835.5
(22) Date of filing: 22.05.2015
(51) Int. Cl.: A23L 3/015, A23L 3/18, A23L 3/3418, A23L 3/3445, A23L 3/16, B65B 31/02, B65B 63/08

(54) **METHOD AND APPARATUS FOR THE MANUFACTURE OF A PACKED PRODUCT**
VERFAHREN UND VORRICHTUNG ZUR HERSTELLUNG EINES VERPACKTEN PRODUKTS
PROCÉDÉ ET APPAREIL DE FABRICATION D'UN PRODUIT EMBALLÉ

(43) Date of publication of application: 23.11.2016
(73) Proprietor: MARS, INCORPORATED, McLean, Virginia 22101-3883 (US)
(72) Inventor: Schmidt, Siegfried, 27283 Verden (DE); Klimach, Thorsten, 27299 Langwedel (DE)
(74) Representative: Scholz, Volker

(56) References cited:
- EP-A1- 0 899 195
- CA-A1- 2 898 643
- US-A- 3 875 318
- US-A- 4 027 450

## Description

The invention relates to a method for the manufacture of a packed product, wherein a product is brought into a superheated steam atmosphere and filled in the steam atmosphere into a packing container, which is then sealed or shut so as to be gas-tight, according to claim 1, and further relates to an apparatus for carrying out the method of the invention, according to claim 12.

Some drawbacks of packed products according to such a method are related to more or less uncontrolled condensation of steam remaining in the packing container after sealing which may affect quality and long term stability of the product.

CA 2 898 643 A1 discloses a method for auto manufacture of a packed product in a superheated steam atmosphere with an O₂ content of max. 3 % and a temperature of at least 120 °C.

US 3 875 318 A discloses a method for aseptic canning of products, wherein an undesired negative pressure inside sealed cans is avoided.

EP 0 899 195 A1 teaches an apparatus adapted to sterilize solid food with steam, where steam in a headspace of filled containers is replaced by nitrogen gas.

US 4 027 450 A discloses a method according to the first part of claim 1 and an apparatus according to the first part of claim 12.

In order to prevent these and further disadvantages the invention provides a method for the manufacture of a packed product, according to claim 1.

As a consequence of replacing by an inert gas part of the steam atmosphere left in the packing container only part of the gaseous atmosphere in the container will condense after cooling, thereby eliminating the problem of producing a substantial negative pressure, particularly if a rigid packing container as for instance a screw-top jar is concerned, which is often undesirable.

A further advantage of the method according to the invention is that the steam atmosphere remaining in the packing container cannot condense uncontrollably on walls of the packing container, if this is exposed to a relatively low temperature, for example less than 10°C or 0°C. Otherwise, parts of the packed product could come into direct contact with condensed water, whereby a large moistness or a large a_{w}-value of the product may form, which regarding the durability of the product could be negative (possible growth of bacteria). According to the invention, this is definitely avoided.

The packing container and the product contained therein can be cooled to a temperature below 50°C, 40°C, 30°C, 20°C or 10°C.

The product can be a food product. The product may be moist before it is brought into the steam atmosphere and have an a_{w}-value of up to 0.9, for example up to 0.8, 0.7, 0.6, 0.5, 0.4 or 0.3.

The product can consist of protein, particularly animal or vegetable protein, and/or cereals. It may be contemplated that the product is extruded directly into the steam atmosphere.

It may be contemplated that the product is dried in the superheated steam atmosphere, and preferably before it is filled into the packing container, particularly to an a_{w}-value of 0.9 or less, for example less than 0.8, 0.7, 0.6 or 0.5.

It may be contemplated that a rigid packing container is made available and a portion, predetermined in this way, of the residual volume of superheated steam atmosphere in the packing container is replaced by the inert gas, that after cooling to a temperature of 20° a predetermined pressure of maximum 750 mbar, 800 mbar, 850 mbar or 900 mbar prevails in the packing container.

At least 55%, 60%, 65%, 70%, 75%, 80%, 85%, 90%, 95%, 98% or 99% of the residual volume of superheated steam atmosphere in the packing container is suitably replaced by the inert gas.

Preferably it is contemplated that step c) is implemented within the superheated steam atmosphere.

The inert gas can be heated before step c) to a temperature of at least 100°C or to the temperature of the superheated steam atmosphere.

N₂, CO₂, N₂O, CO, H₂ or a mixture of two or more of these gases can be used as inert gas.

Particularly a mixture of N₂ or CO₂ with at least 10 vol.-%, 20 vol.-%, 30 vol.-%, 40 vol.-%, 50 vol.-%, 60 vol.-%, 70 vol.-%, 80 vol.-% or 90 vol.-% of CO₂ can be used.

A receptacle with screw cap, for instance made from glass, a can or a plastic bag can be used as packing container.

The product can be packed in a superheated steam atmosphere with an O₂ content of maximum 7.5 vol.-%, 5 vol.-%, 3 vol.-% or 1 vol.-%.

The product can be packed in a superheated steam atmosphere with a temperature of at least 110°C, 120°C, 130°C or 150°C.

With regard to the apparatus of the invention, the gas injector can be disposed within the chamber. The gas injector can consist of a gas supply pipe, which as the result of a relative motion between the gas supply pipe and the packing container immerges into this, so that a gas discharge opening of the gas supply pipe is located in the region of a bottom of the container, in any case nearer to a bottom than to an open seal opening of the container. Thus when inert gas is injected from the gas discharge opening the residual volume of steam atmosphere is expelled from the packing container, particularly if the product is lumpy, granular or granular-type and forms cavities, between which steam atmosphere prevails. Alternatively a gas nozzle, with which the gas in a predetermined direction is jetted into the packing container, can be provided.

Furthermore it may be contemplated that the sealing apparatus is disposed within the chamber.

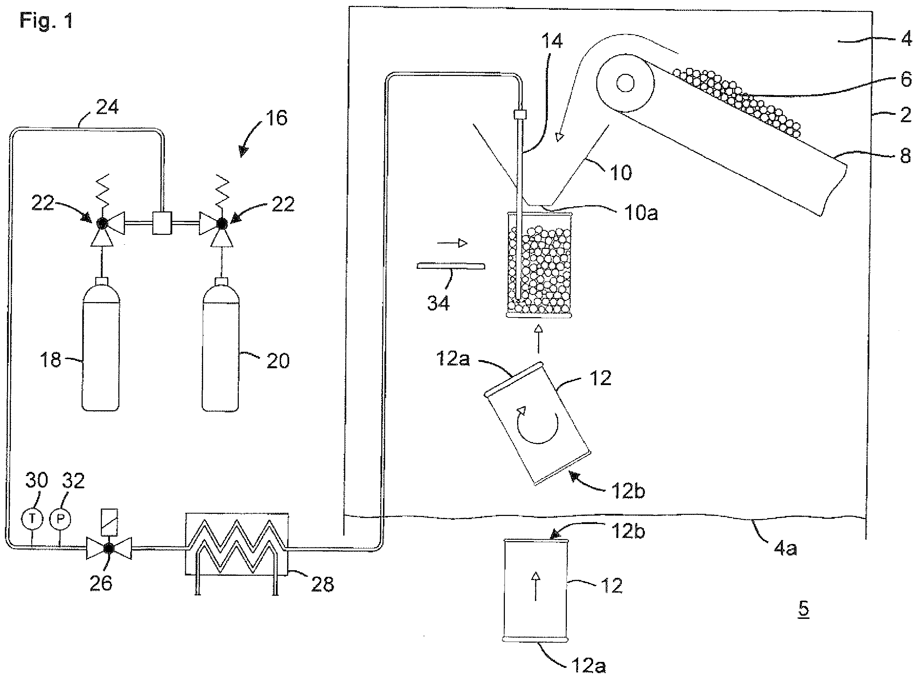

The invention is described below on the basis of an exemplary embodiment, wherein reference is made to a drawing, in which
Fig. 1 shows a schematic illustration of an inventive device for manufacturing a packed product.

A chamber 2 holds a superheated steam atmosphere 4, the temperature of which is kept above 100°C by a - not illustrated - heating system. The pressure in the chamber 2 is atmospheric, i.e. generally 1000 mbar. The oxygen content of the steam atmosphere 4 preferably amounts to less than 10 vol.-% of O₂, particularly less than 3 vol.-%. The chamber 2 can be downwardly open as illustrated, a boundary layer 4a forming between steam atmosphere 4 and the ambient air 5.

A product 6, particularly a food product, is transported by transport equipment 8 into the chamber 2 and finds its way into a product funnel 10.

Before entering the product funnel 10 the product 6, which may be moist before entering the chamber 2, can be dried to a predetermined moistness, for example to an a_{w}-value of 0.9 or less, so that an increase of microorganisms in the packed condition is excluded. Such a drying process of the product 6 can be effected due to the fact that the product dwells for a certain time in the steam atmosphere 4 before it finds its way into the product funnel 10.

The product is filled via the product funnel 10 through an opening 10a into a packing container 12 situated under the product funnel 10. The packing container 12 has a bottom 12a and a seal opening 12b, which is located directly under the opening 10a.

The packing container 12 can be a plastic bag, which may be formed within the chamber 2 from a film material, or however as illustrated a can or a receptacle with cap or lid to be sealed. In the case illustrated a rigid packing container 12 is conveyed from the outside into the steam atmosphere 4 and firstly brought there into an upside-down position, in which the bottom 12a points upwards and the seal opening 12b downwards. In this position ambient air contained in the packing container 12 can escape due to gravity, while the internal volume of the packing container fills with steam atmosphere.

The packing container 12 is brought into a filling position, in which it can be filled with product. In the filling position a gas supply pipe 14 extends into the packing container 12, whereby a gas discharge opening is located at the end of the gas supply pipe near to the bottom 12a of the packing container 12, preferably directly above the bottom 12a. Either the gas supply pipe is firmly mounted and the packing container, while it is being brought into the filling position, is taken into a position embracing the gas supply pipe or the gas supply pipe is moved into the packing container located in the filling position.

The gas supply pipe 14 is connected to a gas injector 16, which in the example illustrated comprises a pressure cylinder 18 filled with N₂, a pressure cylinder 20 filled with CO₂, in each case with a pressure control valve 22, a manifold 24, a solenoid valve 26, a heating station 28 as well as temperature gauge 30 and pressure gauge 32. The gas injector 16 is provided with a - not illustrated - control unit, which acts on the pressure control valves 22, the solenoid valve 26 and the heating station 28, in order to control the supply timing, the quantity, the composition and the temperature of the gas mixture fed to the gas supply pipe 14.

In order to carry out the inventive method the product to be packed is fed via the transport device 8 or alternatively directly through an extruder into the chamber 2 and the steam atmosphere 4. Depending on the drying requirement the product is exposed for a certain time to the steam atmosphere 4 and thereby dried. Subsequently, the product finds its way into the product funnel 10 and from there into an available packing container 12.

The packing container 12 is conveyed into the chamber by transport equipment - not illustrated in detail, rotated there by 180° or conveyed into the chamber already in the rotated position, so that the bottom 12a points upwards, and then rotated by 180°, so that the seal opening 12b points upwards, and brought into the filling position. Preferably the gas supply pipe is located in the packing container before this is filled with product.

Subsequently the packing container 12 is filled with product, particularly with lumpy or granular-type product. The volume or bulk volume of the filled product can amount to at least 50%, 60%, 70%, 80%, 90%, 95% or 99% of the tillable internal volume of the packing container between bottom and seal opening.

Before, during or after filling the product into the packing container a sterile gas, here a mixture of N₂ and CO₂, is injected through the gas supply pipe 14 into the packing container 12, as the result of which at the same time a residual volume of steam atmosphere is expelled from the packing container 12 and/or replaced by the sterile gas. In the case of a lumpy or granular-type product on the one hand a residual volume of steam atmosphere prevails between the individual product pieces and on the other hand in a gap between an upper surface of the filled product and the seal opening 12b. By disposing the gas discharge opening directly above the bottom 12a of the packing container the remaining steam atmosphere can be expelled to a large extent from both regions.

Subsequently the packing container 12 is lowered or the gas supply pipe 14 is raised, so that the gas supply pipe is located outside the packing container, and as necessary this is moved horizontally to a sealing station, in which the packing container 12 is sealed or shut so as to be gas-tight, particularly by applying and sealing a lid 34. The sealing station is preferably disposed within the chamber 2 in order to avoid contact with ambient air.

After being sealed the packing container 12 is removed from the chamber 2 by means of - not illustrated - transport equipment and either cooled down in a cooling device in accordance with a predetermined time-temperature profile or cooled down only by leaving to stand in the environment.

**Reference symbol list**

| | |
|---|---|
| 2 | Chamber |
| 4 | Steam atmosphere |
| 4a | Boundary layer |
| 5 | Ambient air |
| 6 | Product |
| 8 | Transport equipment |
| 10 | Product funnel |
| 10a | Opening |
| 12 | Packing container |
| 12a | Bottom |
| 12b | Seal opening |
| 14 | Gas supply pipe |
| 16 | Gas injector |
| 18 | N₂ pressure cylinder |
| 20 | CO₂ pressure cylinder |
| 22 | Pressure control valve |
| 24 | Manifold |
| 26 | Solenoid valve |
| 28 | Heating station |
| 30 | Temperature gauge |
| 32 | Pressure gauge |
| 34 | Lid |

## Claims

1. Method for the manufacture of a packed product (6), comprising the steps of:
a) bringing a product (6) into a superheated steam atmosphere (4) with an O₂ content of maximum 10 vol.-%, a pressure of between 950 mbar and 1100 mbar and a temperature of at least 100°C,
b) making available a packing container (12) in the superheated steam atmosphere (4) and filling the packing container (12) with a predetermined quantity of the product (6), wherein a residual volume of the packing container (12) not filled with product (6) is filled with the superheated steam atmosphere (4),
c) replacing at least 50% of the residual volume of superheated steam atmosphere (4) in the packing container (12) by a sterile inert gas, by means of a gas supply pipe (14),
d) sealing the packing container (12), and
e) cooling the packing container (12) and the product (6) contained therein,
**characterized in that** in step c) the gas supply pipe (14), as the result of a relative motion between the gas supply pipe (14) and the packing container (12), immerges into the packing container (12), so that a gas discharge opening of the gas supply pipe (14) is located in the region of a bottom (12a) of the packing container (12), nearer to the bottom (12a) than to an open seal opening (12b) of the packing container (12).

2. Method according to claim 1, **characterized in that** the product (6) is dried in the superheated steam atmosphere (4) to an a_{w}-value of 0.9 or less, before it is filled into the packing container (12).

3. Method according to claim 1 or 2, **characterized in that** a rigid packing container is made available and a portion, predetermined in this way, of the residual volume (12) of superheated steam atmosphere (4) in the packing container (12) is replaced by the inert gas so that after cooling to a temperature of 20°C a predetermined pressure of maximum 750 mbar, 800 mbar, 850 mbar or 900 mbar prevails in the packing container (12).

4. Method according to any one of the above claims, **characterized in that** at least 55%, 60%, 65%, 70%, 75%, 80%, 85%, 90% or 95% of the residual volume of superheated steam atmosphere (4) in the packing container (12) is replaced by the inert gas.

5. Method according to any one of the above claims, **characterized in that** step c) is implemented within the superheated steam atmosphere (4).

6. Method according to any one of the above claims, **characterized in that** before step c) the inert gas is heated to a temperature of at least 100°C or to the temperature of the superheated steam atmosphere (4).

7. Method according to any one of the above claims, **characterized in that** N₂, CO₂, N₂O, CO, H₂ or a mixture of these are used as inert gas.

8. Method according to claim 7, **characterized in that** a mixture of N₂ and CO₂ with at least 10 vol.-%, 20 vol.-%, 30 vol.-%, 40 vol.-%, 50 vol.-%, 60 vol.-%, 70 vol.-%, 80 vol.-% or 90 vol.-% of CO₂ is used.

9. Method according to any one of the above claims, **characterized in that** a receptacle with screw-cap, a can or a plastic bag are used as packing container (12).

10. Method according to any one of the above claims, **characterized in that** the product (6) is packed in a superheated steam atmosphere (4) with an O₂ content of maximum 7.5 vol.-%, 5 vol.-%, 3 vol.-% or 1 vol.-%.

11. Method according to any one of the above claims, **characterized in that** the product (6) is dried in a superheated steam atmosphere (4) with a temperature of at least 110°C, 120°C, 130°C or 150°C.

12. Apparatus for carrying out the method according to any one of claims 1 to 11, with a steam generator for producing the superheated steam atmosphere (4), a chamber (2) for holding the superheated steam atmosphere (4), means for making a packing container (12) available in the chamber (2), transport equipment (8) for transporting product (6) into the chamber (2), a filling unit (10) for filling the product (6) into a packing container (12), a gas injector (16) having a gas supply pipe (14) for controlled injection of sterile inert gas into a packing container (12) filled with product (6) and superheated steam atmosphere (4), a sealing apparatus for sealing the filled packing container (12) and transport equipment for removing the sealed packing container from the chamber (2), **characterized in that** the gas supply pipe (14), as the result of a relative motion between the gas supply pipe (14) and the packing container (12), immerges into the packing container (12), so that a gas discharge opening of the gas supply pipe (14) is located in the region of a bottom (12a) of the packing container (12), nearer to the bottom (12a) than to an open seal opening (12b) of the packing container (12).

13. Apparatus according to claim 12, **characterized in that** the gas injector (16) is disposed within the chamber (2).

14. Apparatus according to claim 12 or 13, **characterized in that** the sealing apparatus is disposed within the chamber (2).

## Patentansprüche

1. Verfahren zur Herstellung eines verpackten Produkts (6), umfassend die Schritte von:
a) Bringen eines Produkts (6) in eine überhitzte Dampfatmosphäre (4) mit einem O₂-Gehalt von maximal 10 Vol.-%, einem Druck zwischen 950 mbar und 1100 mbar und einer Temperatur von mindestens 100°C,
b) Bereitstellen eines Verpackungsbehälters (12) in der überhitzten Dampfatmosphäre (4) und Befüllen des Verpackungsbehälters (12) mit einer vorbestimmten Menge des Produkts (6), wobei ein Restvolumen des nicht mit Produkt (6) gefüllten Verpackungsbehälters (12) mit der überhitzten Dampfatmosphäre (4) gefüllt ist,
c) Ersetzen von mindestens 50% des Restvolumens der überhitzten Dampfatmosphäre (4) im Verpackungsbehälter (12) durch ein steriles Inertgas mittels einer Gaszuleitung (14),
d) Verschließen des Verpackungsbehälters (12) und
e) Kühlen des Verpackungsbehälters (12) und des darin enthaltenen Produkts (6),
**dadurch gekennzeichnet, dass** in Schritt c) die Gaszufuhrleitung (14) infolge einer Relativbewegung zwischen der Gaszufuhrleitung (14) und dem Verpackungsbehälter (12) in den Verpackungsbehälter (12) eintaucht, so dass eine Gasabgabeöffnung der Gaszufuhrleitung (14) im Bereich eines Bodens (12a) des Verpackungsbehälters (12) liegt, näher an dem Boden (12a) als an einer offenen Verschlussöffnung (12b) des Verpackungsbehälters (12).

2. Verfahren nach Anspruch 1, **dadurch gekennzeichnet, dass** das Produkt (6) in der überhitzten Dampfatmosphäre (4) auf einen a_{w}-Wert von 0,9 oder weniger getrocknet wird, bevor es in den Verpackungsbehälter (12) gefüllt wird.

3. Verfahren nach Anspruch 1 oder 2, **dadurch gekennzeichnet, dass** ein starrer Verpackungsbehälter zur Verfügung gestellt wird und ein auf diese Weise vorgegebener Teil des Restvolumens (12) der überhitzten Dampfatmosphäre (4) im Verpackungsbehälter (12) durch das Schutzgas ersetzt wird, so dass nach dem Abkühlen auf eine Temperatur von 20°C ein vorgegebener Druck von maximal 750 mbar, 800 mbar, 850 mbar oder 900 mbar im Verpackungsbehälter (12) herrscht.

4. Verfahren nach einem der vorstehenden Ansprüche, **dadurch gekennzeichnet, dass** mindestens 55%, 60%, 65%, 70%, 75%, 80%, 85%, 90% oder 95% des Restvolumens der überhitzten Dampfatmosphäre (4) im Verpackungsbehälter (12) durch das Schutzgas ersetzt wird.

5. Verfahren nach einem der vorstehenden Ansprüche, **dadurch gekennzeichnet, dass** Schritt c) innerhalb der überhitzten Dampfatmosphäre (4) durchgeführt wird.

6. Verfahren nach einem der vorstehenden Ansprüche, **dadurch gekennzeichnet, dass** vor Schritt c) das Inertgas auf eine Temperatur von mindestens 100°C oder auf die Temperatur der überhitzten Dampfatmosphäre (4) erhitzt wird.

7. Verfahren nach einem der vorstehenden Ansprüche, **dadurch gekennzeichnet, dass** N₂, CO₂, N₂O, CO, H₂ oder ein Gemisch davon als Schutzgas verwendet wird.

8. Verfahren nach Anspruch 7, **dadurch gekennzeichnet, dass** ein Gemisch aus N₂ und CO₂ mit mindestens 10 Vol.-%, 20 Vol.-%, 30 Vol.-%, 40 Vol.-%, 50 Vol.-%, 60 Vol.-%, 70 Vol.-%, 80 Vol.-% oder 90 Vol. -% CO₂ verwendet wird.

9. Verfahren nach einem der vorstehenden Ansprüche, **dadurch gekennzeichnet, dass** als Verpackungsbehälter (12) ein Behälter mit Schraubverschluss, eine Dose oder ein Plastikbeutel verwendet wird.

10. Verfahren nach einem der vorstehenden Ansprüche, **dadurch gekennzeichnet, dass** das Produkt (6) in einer Heißdampfatmosphäre (4) mit einem O₂-Gehalt von maximal 7,5 Vol.-%, 5 Vol.-%, 3 Vol.-% oder 1 Vol.-% verpackt wird.

11. Verfahren nach einem der vorstehenden Ansprüche, **dadurch gekennzeichnet, dass** das Produkt (6) in einer überhitzten Dampfatmosphäre (4) mit einer Temperatur von mindestens 110°C, 120°C, 130°C oder 150°C getrocknet wird.

12. Vorrichtung zur Durchführung des Verfahrens nach einem der Ansprüche 1 bis 11 mit einem Dampferzeuger zur Erzeugung der überhitzten Dampfatmosphäre (4), einer Kammer (2) zur Aufnahme der überhitzten Dampfatmosphäre (4), Mitteln zur Bereitstellung eines Verpackungsbehälters (12) in der Kammer (2), einer Transporteinrichtung (8) zum Transportieren von Produkt (6) in die Kammer (2), einer Fülleinheit (10) zum Abfüllen des Produkts (6) in einen Verpackungsbehälter (12), einen Gasinjektor (16) mit einer Gaszufuhrleitung (14) zum kontrollierten Eindüsen von sterilem Inertgas in einen mit Produkt (6) und überhitzter Dampfatmosphäre (4) gefüllten Verpackungsbehälter (12), einer Verschließeinrichtung zum Verschließen des gefüllten Verpackungsbehälters (12) und einer Transporteinrichtung zum Entfernen des verschlossenen Verpackungsbehälters aus der Kammer (2),
**dadurch gekennzeichnet, dass** die Gaszufuhrleitung (14) infolge einer Relativbewegung zwischen der Gaszufuhrleitung (14) und dem Verpackungsbehälter (12) in den Verpackungsbehälter (12) eintaucht, so dass eine Gasaustrittsöffnung der Gaszufuhrleitung (14) im Bereich eines Bodens (12a) des Verpackungsbehälters (12) liegt, näher an dem Boden (12a) als an einer offenen Verschlussöffnung (12b) des Verpackungsbehälters (12).

13. Vorrichtung nach Anspruch 12, **dadurch gekennzeichnet, dass** der Gasinjektor (16) innerhalb der Kammer (2) angeordnet ist.

14. Vorrichtung nach Anspruch 12 oder 13, **dadurch gekennzeichnet, dass** die Verschließeinrichtung innerhalb der Kammer (2) angeordnet ist.

## Revendications

1. Méthode de fabrication d'un produit conditionné (6) comprenant les étapes suivantes :
a) amener un produit (6) dans une atmosphère de vapeur surchauffée (4) avec une teneur maximale de O₂ de 10% en volume, une pression comprise entre 950 mbar et 1 100 mbar, et une température d'au moins 100°C,
b) placer un récipient de conditionnement (12) dans l'atmosphère de vapeur surchauffée (4), et remplir le récipient de conditionnement (12) avec une quantité prédéterminée de produit (6), un volume résiduel du récipient de conditionnement (12) non rempli de produit (6) étant rempli de l'atmosphère de vapeur surchauffée (4),
c) remplacer au moins 50% du volume résiduel d'atmosphère de vapeur surchauffée (4) dans le récipient de conditionnement (12) par un gaz inerte stérile, par le biais d'un tuyau de fourniture de gaz (14),
d) effectuer la fermeture étanche du récipient de conditionnement (12), et
e) refroidir le récipient de conditionnement (12) et le produit (6) contenu dans celui-ci,
**caractérisée en ce qu'**en raison d'un mouvement relatif entre le tuyau de fourniture de gaz (14) et le récipient de conditionnement (12), à l'étape c), le tuyau de fourniture de gaz (14) s'immerge dans le récipient de conditionnement (12), de sorte qu'une ouverture d'évacuation du gaz du tuyau de fourniture de gaz (14) est située dans la zone d'un fond (12a) du récipient de conditionnement (12), plus proche du fond (12a) qu'une ouverture de joint ouvert (12b) du récipient de conditionnement (12).

2. Méthode selon la revendication 1, **caractérisée en ce que** le produit (6) est séché dans l'atmosphère de vapeur surchauffée (4) à une valeur a_{w-} égale à 0,9 ou moins, avant d'être rempli dans le récipient de conditionnement (12).

3. Méthode selon la revendication 1 ou 2, **caractérisée en ce qu'**un récipient de conditionnement rigide est pourvu, et qu'une partie, prédéterminée de cette façon, du volume résiduel (12) de l'atmosphère de vapeur surchauffée (4) dans le récipient de conditionnement (12), est remplacée par le gaz inerte de sorte qu'après le refroidissement à une température de 20°C, une pression prédéterminée d'un maximum de 750 mbar, , 800 mbar 850 mbar, ou 900 mbar prévaut dans le récipient de conditionnement (12).

4. Méthode selon une quelconque des revendications ci-dessus, **caractérisée en ce qu'**au moins 55%, 60%, 65%, 70%, 75%, 80%, 85%, 90% ou 95% du volume résiduel de l'atmosphère de vapeur surchauffée (4) dans le récipient de conditionnement (12) est remplacée par le gaz inerte.

5. Méthode selon une quelconque des revendications ci-dessus, **caractérisée en ce que** l'étape c) est mise en oeuvre dans l'atmosphère de vapeur surchauffée (4).

6. Méthode selon une quelconque des revendications ci-dessus, **caractérisée en ce qu'**avant l'étape c), le gaz inerte est chauffé à une température de 100°C, ou à la température de l'atmosphère de vapeur surchauffée (4).

7. Méthode selon une quelconque des revendications ci-dessus, **caractérisée en ce que** l'on utilise du N₂, du CO₂, du N₂O, du CO, du H₂, ou un mélange de ces gaz, en tant que gaz inerte.

8. Méthode selon la revendications 7, **caractérisée en ce qu'**un mélange de N₂ et de CO₂, comprenant au moins 10% en volume, 20% en volume, 30% en volume, 40% en volume, 50% en volume, 60% en volume, 70% en volume, 80% en volume, ou 90% en volume de CO₂, est utilisé.

9. Méthode selon une quelconque des revendications ci-dessus, **caractérisée en ce que** l'on utilise un récipient avec bouchon à vis, une boîte ou un sac de plastique en tant que récipient de conditionnement (12).

10. Méthode selon une quelconque des revendications ci-dessus, **caractérisée en ce que** le produit (6) est emballé dans une atmosphère de vapeur surchauffée (4) avec une teneur en O₂ de 7,5% en volume, 5% en volume, 3% en volume ou 1% en volume maximum.

11. Méthode selon une quelconque des revendications ci-dessus, **caractérisée en ce que** le produit (6) est séché dans une atmosphère de vapeur surchauffée (4) avec une température d'au moins 110°C, 120°C, 130°C ou 150°C.

12. Appareil pour l'exécution de la méthode selon une quelconque des revendications 1 à 11, avec un générateur de vapeur produisant l'atmosphère de vapeur surchauffée (4), une chambre (2) pour contenir l'atmosphère de vapeur surchauffée (4), un dispositif pour pourvoir la chambre (2) d'un récipient de conditionnement (12), une installation de transport (8) pour transporter du produit (6) dans la chambre (2), un dispositif de remplissage (10) pour remplir le récipient de conditionnement (12) de produit (6), un injecteur de gaz (16) muni d'un tuyau de fourniture de gaz (14) pour effectuer une injection de gaz inerte stérile dans un récipient de conditionnement (12) rempli de produit (6) et d'une atmosphère de vapeur surchauffée (4), un appareil d'étanchéité pour effectuer la fermeture étanche du récipient de conditionnement (12) rempli, et une installation de transport pour enlever le récipient de conditionnement fermé hermétiquement de la chambre (2), **caractérisé en ce qu'**à la suite du mouvement relatif entre le tuyau de fourniture de gaz (14) et le récipient de conditionnement (12), le tuyau de fourniture de gaz (14) est immergé dans le récipient de conditionnement (12) afin qu'une ouverture d'évacuation de gaz du tuyau de fourniture de gaz (14) soit situé dans la zone du fond (12a) du récipient de conditionnement (12), plus proche du fond (12a) qu'une ouverture de joint ouvert (12b) du récipient de conditionnement (12).

13. Appareil selon la revendication 12, **caractérisé en ce que** l'injecteur de gaz (16) est disposé dans la chambre (2).

14. Appareil selon la revendication 12 ou 13, **caractérisé en ce que** l'appareil d'étanchéité est disposé dans la chambre (2).
